# EUROPÄISCHE PATENTSCHRIFT

(11) **EP 2 759 364 B1**
(45) Veröffentlichungstag und Bekanntmachung des Hinweises auf die Patenterteilung: **01.09.2021**
(21) Anmeldenummer: 13005676.5
(22) Anmeldetag: 05.12.2013
(51) Int. Cl.: B23F 21/02, B23F 5/04, B24D 5/14

(54) **Werkzeug zum Schleifen von verzahnten Werkstücken mit Kollisionskontur**
Tool for grinding toothed work pieces with collision contour
Outil de ponçage de pièces dentées dotées d'un contour de collision

(30) Priorität: 24.01.2013 DE 102013001197
(43) Veröffentlichungstag der Anmeldung: 30.07.2014
(73) Patentinhaber: LIEBHERR-VERZAHNTECHNIK GmbH, 87437 Kempten (DE)
(72) Erfinder: Breit, Thomas, 87439 Kempten (DE); Zankl, Manfred, 87634 Obergünzburg (DE)
(74) Vertreter: Laufhütte, Dieter

(56) Entgegenhaltungen:
- DE-A1- 10 104 410
- DE-B- 1 116 027
- DE-B3-102008 035 525
- DE-C1- 4 447 036
- US-A- 1 685 989

## Beschreibung

Die Erfindung betrifft ein Werkzeug zum Schleifen von verzahnten Werkstücken mit abrichtbaren Schleifwerkzeugen die hinsichtlich des maximalen Werkzeugdurchmessers durch Kollisionsflächen, wie Störkonturen oder Einschränkungen aus der Vorbearbeitung wie z.B. Werkzeugauslauf, optimiert wurden.

Bekannte Werkzeuge zum Wälzschleifen von Verzahnungen haben immer einen Werkzeugaufnahmedorn oder -flansch mit dem das Werkzeug in der Schleifmaschine aufgenommen wird. Dieser Dorn/Flansch erfordert einen bestimmten Mindestdurchmesser, um die notwendige Stabilität aufzuweisen. Auf diesen Dorn/Flansch wird das oder die Werkzeuge aufgezogen und in der Regel durch seitlich angeordnete Befestigungselemente auf dem Dorn/Flansch befestigt. Damit es beim Schleifen nicht zu einer Kollision zwischen Werkzeug und Aufnahmedorn/Befestigungsflansch kommt, beginnt der nutzbare Werkzeugdurchmesser erst ab diesem Bereich. Aus diesem Bauprinzip und der für einen wirtschaftlichen Schleifbetreib notwendigen Belagstärke für den Schleifbelag ergibt sich ein bestimmter Werkzeugmindestdurchmesser.

Moderne Getriebe enthalten neben den klassischen Zahnrädern mit Bohrung ("Bohrungs-Werkstücken") auch Eingangs-, Zwischen- und Abtriebswellen, die eine oder mehrere Verzahnung aufweisen, die direkt mit der Welle verbunden sind, bzw. aus einem Rohmaterial stammen. Kennzeichen dieser Bauteile ist eine Werkstückgeometrie die eine sogeannte Kollisionsverzahnungen aufweist, d.h. nahe an der zu bearbeitenden Verzahnung ist eine weitere Verzahnung, ein Wellenbund, eine andere Störkontur oder aber die Verzahnung endet nicht in einer Stirnfläche sondern läuft mit einem Radius aus. Hinsichtlich der Auslegung des Verzahnungswerkzeuges muss dies bereits bei der Weichbearbeitung (Vorfräsen mit Wälzfräser oder Formfräser) berücksichtig werden. Bei der nach dem Härten erforderlichen Hartfeinbearbeitung darf dann der Werkzeugdurchmesser häufig nur max. den gleichen Durchmesser haben wie bei der Weichbearbeitung.

Allgemein werden diese Werkstücke nach der Wärmebehandlung mit den folgenden Hartfeinbearbeitungs-Verfahren bearbeitet:
1. Wälzschleifen mit galv. gebundenen CBN-Wälzschleifschnecken
2. Profilschleifen mit galv. gebundenen CBN-Profilschleifscheiben
3. Verzahnungs-Honen und
4. Wälzschleifen mit abrichtbarem Schneidstoff (Korund, CBN od. ähnlichem)
5. Profilschleifen mit abrichtbarem Schneidstoff (Korund, CBN od. ähnlichem)

Sollen abrichtbare Werkzeuge zum Einsatz kommen (Verfahren 4 & 5) fehlt durch die Kollisionssituation bei Schleifscheiben und Schleifschnecken und einem herkömmlichem Werkzeugaufbau der erforderliche Bauraum für die notwendige Belagstärke, um auch beim mehrmaligen Abrichten von kleinen Scheidstoffschichten immer neue unverbrauchte, schneidfreudige Schleifwerkzeugoberflächen zu erzeugen. Bedingt durch diesen Umstand sind bei dieser Anwendung abrichtbare Profil- und Wälzschleifschnecken so nicht wirtschaftlich einsetzbar, obwohl diese Schneidstoffe bei "kollisionsfreien" Verzahnungen äußerst erfolgreich eingesetzt werden.

Deshalb werden diese Verzahnungen bisher dann häufig mit den Verfahren 1-3 hartfeinbearbeitet. Aus wirtschaftlichen Gründen und weil Werkzeuge aus abrichtbaren Schneidstoffen einfacher umprofiliert werden können, wäre aber eine Bearbeitung mit abrichtbaren Werkzeugen wünschenswert. Dazu ist es aber erforderlich, dass eine gewisse Mindestbelagstärke realisiert wird, um ein wirtschaftlich einsetzbares Werkzeug zu erhalten. Gleichzeitig benötigt der Werkzeugdorn einen Mindestdurchmesser, damit die notwendige Stabilität und Steifigkeit realisiert wird. Diese beiden Randbedingen definieren bzw. schränken den möglichen radialen Bauraum für das Werkzeug ein.

Die DE 101 04 410 A1, die die Basis für den Oberbegriff des Anspruchs 1 bildet, offenbart ein Werkzeug zum Wälzschleifen von Verzahnungen bei dem das Schleifwerkzeug aus einem Tragring und einem Schleifkörper besteht, der auf einen konische Aufnahmeflansch aufgezogen wird. Dadurch wird das Schleifwerkzeug spielfrei gespannt. Der Verformungswiderstand des Tragringes ist dabei größer als der des Schleifkörpers. Durch diese Ausführungsform werden fliehkraftbedingte Verlagerungen und Verformungen der Schleifschnecke minimiert. Nachteil an dieser Ausführung ist der dafür notwendige Platzbedarf um alle Funktionselement im Werkzeug unterzubringen und gleichzeitig die notwendige Stabilität der Aufnahme zu gewährleisten.

In der WO 94/19135 wird ein einteiliges galvanisch belegtes Werkzeug mit zwei verschiedenen Bereichen offenbart . Diese zwei Bereiche sind mit Hartstoffen belegt, um unterschiedliche Schleifaufgaben während des Hartfeinbearbeitungsprozesses zu übernehmen. Das Schleifwerkzeug besitzt eine konische Aufnahmehülse mit der es auf einen Werkzeuggrunddorn aufgezogen und gespannt wird. Auch diese Ausführungsform erfordert eine gewisse Mindesthöhe für das Werkzeug. Verbunden mit einem stabilen Werkzeuggrunddorn ergibt sich daraus ein bestimmter Werkzeugmindestdurchmesser. Dabei ändert sich bei dieser Ausführungsform des Werkzeuges der Werkzeugdurchmesser bzw. die Belagstärke nicht mehr, da kein Abrichten des Schleifbelages erfolgt. Wenn dieses Werkzeug verschlissen ist, muss es zunächst entschichtet werden, um anschließend neu wiederbelegt zu werden. Nachteil an dieser Ausführungsform ist es, dass Änderungen an der Profilform des Schleifwerkzeuges nur bei seiner Herstellung erzeugt werden können. In der Hartfeinbearbeitung sind solche Änderungen oder Umprofilierungen aufgrund der geringen Belagstärke des Schleifmateriales nicht mehr möglich. Dies ist nur bei abrichtbaren Schleifwerkzeugen möglich.

Die DE 10 2004 020 364 A1 beschreibt ebenfalls ein Werkzeug zum Wälzschleifen von Verzahnungen mit einem mehrteiligen Schleifwerkzeug mit abrichtbaren Schleifkörpern. Hier wird ein mehrteiliges Werkzeug beschrieben, bei dem verschiedenartige Schleifkörper auf einem gemeinsamen Grunddorn aufgespannt werden.

Wünschenswert wäre es, dem Fachmann ein neuartiges Werkzeug zur wirtschaftlichen Hartfeinbearbeitung von Werkstücken mit einer Störkontur, die nahe an der zu bearbeitenden Verzahnung liegt, an die Hand zu geben.

Eine Verwendung von Schleifwerkzeugen mit Abmessungen nach dem Stand der Technik ist bei solchen Verzahnungen aus Kollisionsgründen nicht mehr möglich. Verwendet man nun ein Werkzeug mit reduziertem Aussendurchmesser, aber konventionellem Aufbau, verringert sich die verbleibende Restwandstärke des abrichtbaren Schleifbelages so weit, das eine wirtschaftliche Verwendung nicht mehr gegeben ist.

Die Aufgabe der vorliegenden Erfindung liegt nun darin, den Aufbau des Schleifwerkzeuges so zu gestalten, dass die erforderliche Steifigkeit des Aufnahmedornes gewährlistet ist, um die geforderte Schleifqualität zu erzeugen und gleichzeitig die notwendige Belagstärke für eine wirtschaftliche Anzahl an Abrichtzyklen zu Verfügung zu stellen.

Diese Aufgabe wird durch ein Werkzeug mit den Merkmalen des Anspruchs 1 gelöst.

Kernpunkt der Erfindung ist ein Werkzeug zum Wälzschleifen mit abrichtbarer Schleifschnecke mit kleinem Aussendurchmesser und einer für einen mehrmaligen Abrichtzyklus notwendigen Belagstärke. Erreicht wird dies im im Gegensatz zum konventionellen Werkzeugaufbau dadurch, dass der Schleifbelag nicht mehr auf die Werkzeugaufnahme, die insbesondere aus einem Werkzeugdorn oder einer Aufnahmehülse besteht, aufgeschoben und dort gespannt wird, sondern indem der Schleifbelag direkt auf den Werkzeugdorn aufgeklebt wird.

Durch diesen Aufbau entfallen die seitlich neben den Werkzeugen angeordneten Anschläge für das Werkzeug und die früher notwendige Befestigungs- und Fixierungseinrichtungen. Zusätzlich entfällt die Schleifschneckenhülse, auf die bei konventioneller Werkzeugauslegung, die Schleifschnecke üblicherweise aufgeklebt ist, insbesondere wenn das Schleifwerkzeug aus Schleifscheibensegmenten aufgebaut ist.

Durch diese Entwicklung sind deutlich kleinere Werkzeugdurchmesser für Abrichtbare Werkzeuge realisierbar und ermöglichen so eine wirtschaftliche und flexible Fertigung von Werkstücken mit Kollisionskontur auch unter Verwendung abrichtbarer Schleifwerkzeuge. Durch den segmentierten Aufbau des Schleifwerkzeuges lassen sich auch Werkzeugbreiten realisieren, wie sie sich bei einem einteiligen Werkzeugaufbau nicht mehr realisieren lassen. Die maximale Breite des Schneckenrohlings ist bekanntlich durch sein Herstellverfahren eingeschränkt. Ab einem bestimmten Verhältnis von Schneckenbreite zu Materialstärke lassen sich sonst die Schneckenrohlinge nicht mehr in der erforderlichen Homogenität pressen. Dieses Werkzeug hätte dann einen Nachteil z.B. aufgrund unterschiedlichen Schleifverhaltens über seiner Breite oder unterschiedlichen Aufnahmevermögens für Kühlmittel, was wiederum zu Problemen beim Auswuchten des Werkzeuges führen würde.

Weitere vorteilhafte Ausführungsformen des Werkzeugs sind Gegenstand der sich an den Hauptanspruch anschließenden abhängigen Ansprüche.

Das aufgeklebte Werkzeug kann wiederum mit weiteren Werkzeugen kombiniert werden, sei es dass mehrere Verzahnungen hintereinander an einem Werkstück bearbeitet werden sollen, sei es dass mit unterschiedlichen Schleifverfahren z.b. Wälz- und Profilschleifen eine Verzahnung bearbeitet werden soll. Weiterhin ist es auch möglich verschiedene Schleifprozesse, wie Verzahnungsschleifen und das Schleifen von Außendurchmessern, Flächen, Nuten oder Schlitzen mit einem erfingsgemäßen Werkzeug zu bearbeiten. Auch eine Kombination aus abrichtbaren und nicht abrichtbaren Werkzeugen ist möglich, um eine oder mehrere Verzahnungen oder Flächen zu bearbeiten.

Denkbar wäre auch eine Kombination eines abrichtbaren Schleifwerkzeugs, um eine kollisionsbehaftete Kontur zu bearbeiten, zusammen mit einem nicht abrichtbaren Werkzeug. Hierdurch kann eine noch kleinere kollisionsbehaftete Kontur bearbeitet werden, bei der die Bearbeitung mit einem abrichtbaren Werkzeug wirtschaftlich nicht mehr darstellbar ist. Dies ermöglicht erfindungsgemäß z.B. die Bearbeitung von Verzahnungen die bislang so nicht wirtschaftlich wälzschleifbar waren.

Eine weitere Anwendung dieser Werkzeuge liegt bei Werkstücken, bei denen die Verzahnung nicht in einer Stirnfläche endet, sondern in einem Werkzeugauslauf vorgesehen ist. Hier darf der Durchmesser des Schleifwerkzeuges nicht größer sein als der Durchmesser aus der Vorbearbeitung..

Weitere Merkmale, Einzelheiten und Vorteile der Erfindung werden anhand von schematisch in der Zeichnung dargestellten Ausführungsbeispielen beschrieben. Hierbei zeigt:
- Fig. 1:: ein Schleifwerkzeug nach dem Stand der Technik,
- Fig. 2:: ein Schleifwerkzeug im Eingriff bei einem Werkstück mit Kollisionskontur,
- Fig. 3:: Ausführungsbeispiele für Schleifwerkzeuge gemäß der Erfindung und
- Fig. 4:: beispielhafte Werkstücke gemäß der Erfindung.

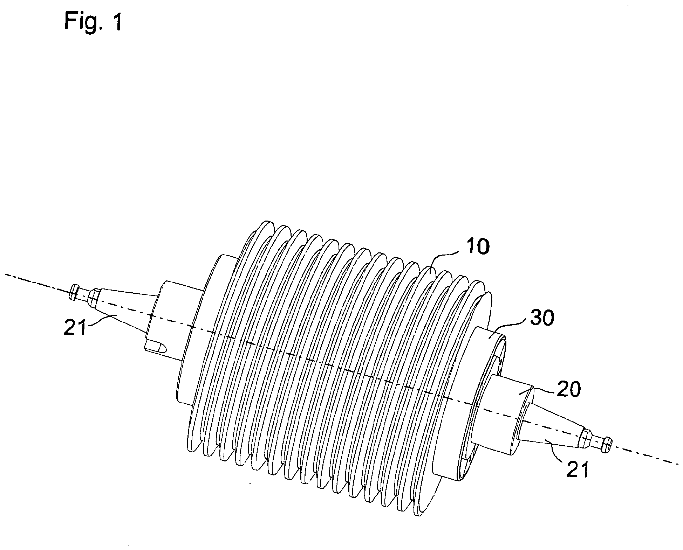

Figur 1 zeigt ein Schleifwerkzeug gemäß dem Stand der Technik. Auf einem Werkzeugdorn 20 mit beidseitiger Aufnahmefläche 21 zur Aufnahme der Werkzeugs im Bearbeitungskopf einer hier nicht dargestellten Verzahnungsschleifmaschine werden ein oder mehrere Schleifwerkzeuge 10 aufgenommen und durch Fixierung mit einem Spanndeckel bzw. einer Spanneinrichtung 30 auf dem Werkzeugdorn fixiert.

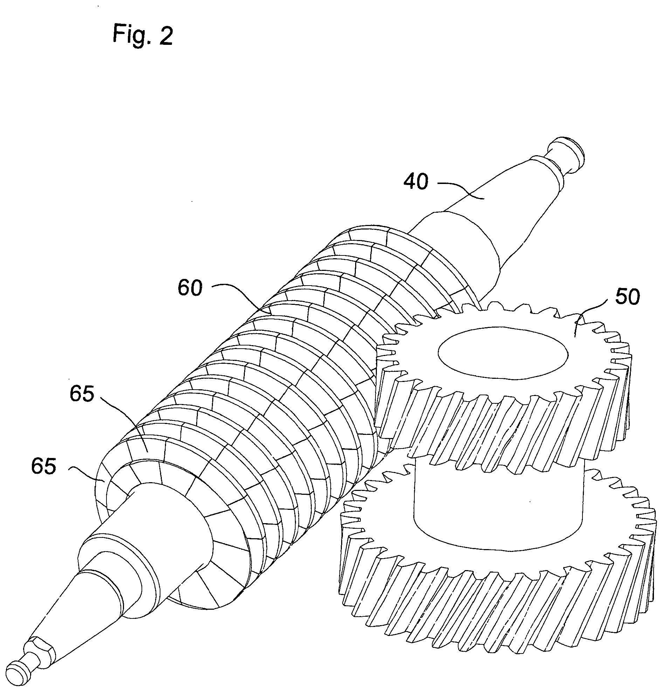

Die Figur 2 zeigt nun eine perspektivische Ansicht eines Schleifwerkzeuges 60 gemäß der Erfindung. Anhand der dargestellten Doppelverzahnung 50 sieht man auch die Problematik, die zu einer Durchmesserbegrenzung des Schleifwerkzeuges führt. Aufgrund der Schrägverzahnung und die dadurch bedingte Schrägstellung des Schleifwerkzeuges im Eingriff darf der Werkzeugdurchmesser einen bestimmten Durchmesser nicht übersteigen, da es ansonsten zu einer Kollision des Werkzeugs mit der unteren Verzahnung kommt.

Ebenfalls erkennbar ist der Aufbau der Schleifschnecke, die aus mehreren einzelnen Segmenten 65 besteht, die radial auf dem Außenumfang des Werkzeugdornes aufgeklebt sind.

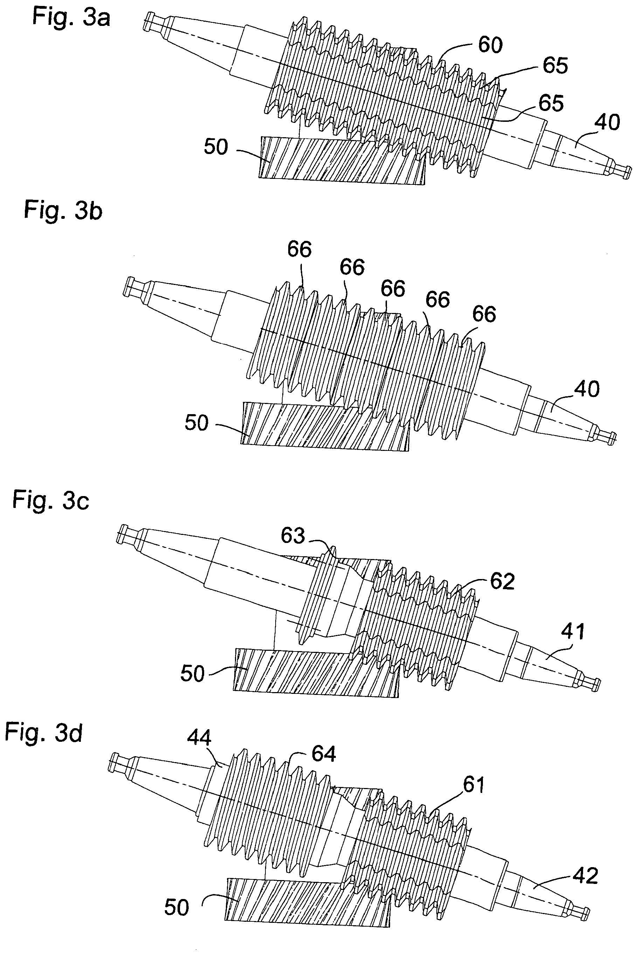

Die Figuren 3a bis e zeigen exemplarisch verschiedene Ausführungen der Werkzeuganordnung mit einem oder mehrerer Schleifwerkzeugen die mit einem Werkstück mit Kollisionskontur, im Beispiel der Doppelverzahnung 50 aus der Figur 2, im Eingriff sind. Die Ansicht ist aus Richtung des Bearbeitungskopfes in Richtung auf das zu bearbeitende Werkstück dargestellt.

Die Figur 3a zeigt eine abrichtbare Schleifschnecke 60 die aus radial am Außenumfang auf den Werkzeugdorn 40 aufgeklebten Kreissegmenten 65 besteht. Die Schrägstellung des Werkzeuges wird u.a. durch den Schrägungswinkel und die Werkzeugauslegung bestimmt.

In der Figur 3b wird ebenfalls eine abrichtbare Schleifschnecke gezeigt, die in diesem Fall aus mehreren Ringabschnitten 66 aufgebaut ist die auch wieder auf den Werkzeugdorn 40 aufgeklebt wurden.

Das in der Figur 3c gezeigte Kombiwerkzeug besteht aus einer auf dem Werkzeugdorn 41 aufgeklebten, aus Einzelsegmenten aufgebauten, abrichtbaren Schleifschnecke 62 und aus einer montierten Schleifscheibe 63, die abrichtbar oder nicht abrichtbar ausgeführt sein kann.

Die Werkzeuganordnung mit zwei Schleifschnecken, wie sie in der Figur 3d gezeigt wird, besteht ebenfalls aus einer aufgeklebten Schleifschnecke 61 und einer aufgezogenen Schleifschnecke 64 abrichtbar oder nicht abrichtbar ausgeführt, die in diesem Fall durch einen Spanndeckel 44 auf dem Werkzeugdorn 42 fixiert wird.

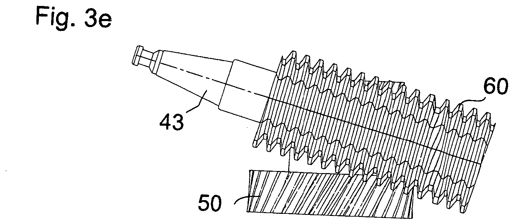

Figur 3e zeigt eine Werkzeuganordnung mit einseitigem Aufnahmekonus für das Werkzeug in der Werkzeugaufnahme.

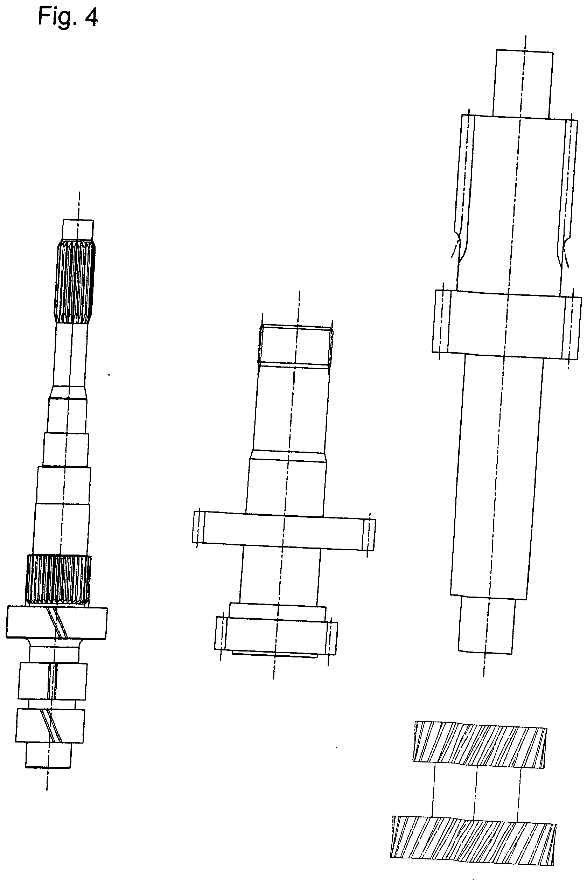

In der Figur 4 sind exemplarisch Werkstücke, wie sie mit einem Schleifwerkzeug gemäß der Erfindung bearbeitet werden können, dargestellt.

## Patentansprüche

1. Werkzeug zum Schleifen von Verzahnungen bei denen der maximale Werkzeugdurchmesser durch Kollisionskonturen am Werkstück eingeschränkt wird, mit einem Werkzeugdorn (40) und einem auf diesem aufgenommenen abrichtbaren Schleifwerkzeug,
**dadurch gekennzeichnet,**
**dass** der Schleifbelag des abrichtbaren Schleifwerkzeuges direkt auf den Werkzeugdorn (40) aufgeklebt ist.

2. Werkzeug nach Anspruch 1, **dadurch gekennzeichnet, dass** das abrichtbare Schleifwerkzeug aus mindestens einer einteiligen Hülse besteht, die auf den Werkzeugdorn (40) aufgeklebt ist.

3. Werkzeug nach Anspruch 1, **dadurch gekennzeichnet, dass** das abrichtbare Schleifwerkzeug aus mindestens zwei Kreissegmenten besteht, die radial auf den Werkzeugdorn (40) aufgeklebt sind.

4. Werkzeug nach einem der Ansprüche 1 bis 3, **dadurch gekennzeichnet, dass** das abrichtbare Schleifwerkzeug aus mindestens zwei Bereichen besteht, die unterschiedliche Belagspezifikationen, wie Körnung und/oder Bindemittel und/oder mindestens eine physikalische oder chemische Eigenschaft des Bindemittels, aufweisen und hinsichtlich des Einsatzes als Schrupp- oder Schlichtwerkzeug für mindestens eine Verzahnung ausgelegt sind.

5. Werkzeug nach einem der vorhergehenden Ansprüche, **dadurch gekennzeichnet, dass** das abrichtbare Schleifwerkzeug aus mindestens zwei Bereichen besteht, die unterschiedliche Schneckengeometrien aufweisen, wobei die Bereiche jeweils in einen Schrupp- und einen Schlichtbereich aufgeteilt sind und wobei die Bereiche unterschiedliche Belagspezifikation, wie Körnung und/oder Bindemittel und/oder mindestens eine physikalische oder chemische Eigenschaft des Bindemittels aufweisen, um zwei oder mehr unterschiedliche Verzahnungen zu schleifen.

6. Werkzeug nach einem der vorhergehenden Ansprüche, **dadurch gekennzeichnet, dass** der Werkzeugaufnahmedorn (40) mindestens zwei Bereiche aufweist, in denen in mindestens einem Bereich ein abrichtbares Schleifwerkzeug aufklebbar ist, während in dem anderen Bereich ein abrichtbares oder nicht abrichtbares Schleifwerkzeug aufspann- oder befestigbar ist.

7. Werkzeug nach einem der vorhergehenden Ansprüche, **dadurch gekennzeichnet, dass** der Werkzeugaufnahmedorn (40) mindestens zwei Bereiche aufweist, wobei mindestens ein Schleifwerkzeug eine abrichtbare Schleifschnecke (62) ist und mindestens ein weiteres Schleifwerkzeug ein abrichtbares oder nicht abrichtbares Schleifwerkzeug in Form einer Schleifscheibe (63), eines Schleifscheibensatzes oder einer Schleifschnecke ist.

8. Werkzeug nach einem der vorhergehenden Ansprüche, **dadurch gekennzeichnet, dass** der Werkzeugaufnahmedorn (40) mindestens zwei Bereiche aufweist, wobei mindestens ein Schleifwerkzeug eine abrichtbare Schleifscheibe oder ein Schleifscheibensatz ist und mindestens ein weiteres Schleifwerkzeug ein abrichtbares oder nicht abrichtbares Schleifwerkzeug in Form einer Schleifscheibe, eines Schleifscheibensatzes oder einer Schleifschnecke ist.

9. Werkzeug nach Anspruch 7 oder 8, **dadurch gekennzeichnet, dass** der Werkzeugaufnahmedorn (40) mindestens ein Werkzeug zum Verzahnungsschleifen aufweist, wobei mindestens ein Schleifwerkzeug eine abrichtbare Schleifschnecke, eine Schleifscheibe oder ein Schleifscheibensatz ist und mindestens ein weiteres Schleifwerkzeug ein abrichtbares oder nicht abrichtbares Schleifwerkzeug in Form einer Schleifscheibe oder eines Schleifscheibensatzes ist, um damit nicht verzahnte Geometrien, wie z.B. Durchmesser, Flächen, Nuten, oder Schlitze zu bearbeiten.

10. Werkzeug nach einem der vorhergehenden Ansprüche, **dadurch kennzeichnet, dass** der Werkzeugaufnahmedorn (40) eine oder zwei Schnittstellen zur Aufnahme des Werkzeugdornes in einem Bearbeitungskopf aufweist.

## Claims

1. Tool for grinding gear teeth in which the maximum tool diameter is limited by collision contours on the workpiece, with a tool mandrel (40) and a dressable grinding tool which is held thereon,
**characterised in that**
the abrasive coating of the dressable grinding tool is glued directly onto the tool mandrel (40).

2. Tool according to claim 1, **characterised in that** the dressable grinding tool consists of at least a one-part sleeve which is glued onto the tool mandrel (40).

3. Tool according to claim 1, **characterised in that** the dressable grinding tool consists of at least two segments of a circle which are glued radially onto the tool mandrel (40).

4. Tool according to one of claims 1 to 3, **characterised in that** the dressable grinding tool consists of at least two regions which have different coating specifications, such as grain size and/or binder and/or at least one physical or chemical property of the binder, and with regard to use are designed as a roughing tool or finishing tool for at least one set of gear teeth.

5. Tool according to one of the preceding claims, **characterised in that** the dressable grinding tool consists of at least two regions which have different worm geometries, the regions being divided in each case into a roughing region and a finishing region and the regions having different coating specifications, such as grain size and/or binder and/or at least one physical or chemical property of the binder, in order to grind two or more different sets of gear teeth.

6. Tool according to one of the preceding claims, **characterised in that** the tool-holding mandrel (40) has at least two regions in which a dressable grinding tool can be glued on in at least one region, whereas a dressable or non-dressable grinding tool can be clamped on or fastened in the other region.

7. Tool according to one of the preceding claims, **characterised in that** the tool-holding mandrel (40) has at least two regions, with at least one grinding tool being a dressable worm grinding wheel (62) and at least one further grinding tool being a dressable or non-dressable grinding tool in the form of a grinding wheel (63), a set of grinding wheels or a worm grinding wheel.

8. Tool according to one of the preceding claims, **characterised in that** the tool-holding mandrel (40) has at least two regions, with at least one grinding tool being a dressable grinding wheel or a set of grinding wheels and at least one further grinding tool being a dressable or non-dressable grinding tool in the form of a grinding wheel, a set of grinding wheels or a worm grinding wheel.

9. Tool according to claim 7 or 8, **characterised in that** the tool-holding mandrel (40) has at least one tool for grinding gear teeth, with at least one grinding tool being a dressable worm grinding wheel, a grinding wheel or a set of grinding wheels and at least one further grinding tool being a dressable or non-dressable grinding tool in the form of a grinding wheel or a set of grinding wheels, in order to machine non-toothed geometries, such as diameters, faces, grooves or slots, therewith.

10. Tool according to one of the preceding claims, **characterised in that** the tool-holding mandrel (40) has one or two interfaces for holding the tool mandrel in a machining head.

## Revendications

1. Outil de ponçage de dentures, pour lesquelles le diamètre d'outil maximal est limité par des contours de collision sur la pièce, avec un mandrin d'outil (40) et un outil de ponçage pouvant être dressé, logé sur celui-ci,
**caractérisé en ce que**
la garniture de ponçage de l'outil de ponçage pouvant être dressé est collée directement sur le mandrin d'outil (40).

2. Outil selon la revendication 1, **caractérisé en ce que** l'outil de ponçage pouvant être dressé est constitué d'au moins une douille en une partie, qui est collée sur le mandrin d'outil (40).

3. Outil selon la revendication 1, **caractérisé en ce que** l'outil de ponçage pouvant être dressé est constitué d'au moins deux segments circulaires, qui sont collés de manière radiale sur le mandrin d'outil (40).

4. Outil selon l'une quelconque des revendications 1 à 3, **caractérisé en ce que** l'outil de ponçage pouvant être dressé est constitué d'au moins deux zones, qui présentent différentes spécifications de garniture, telles que le grain et/ou le liant et/ou au moins une propriété physique ou chimique du liant et sont conçues, eu égard à l'emploi en tant qu'outil de dégrossissage ou outil de finissage, pour au moins une denture.

5. Outil selon l'une quelconque des revendications précédentes, **caractérisé en ce que** l'outil de ponçage pouvant être dressé est constitué d'au moins deux zones, qui présentent différentes géométries de vis sans fin, dans lequel les zones sont divisées respectivement en une zone de dégrossissage et en une zone de finissage et dans lequel les zones présentent une spécification de garniture différente, telle que le grain et/ou le liant et/ou au moins une propriété physique ou chimique du liant pour poncer deux dentures différentes ou plus.

6. Outil selon l'une quelconque des revendications précédentes, **caractérisé en ce que** le mandrin de logement d'outil (40) présente au moins deux zones, dans lesquelles un outil de ponçage pouvant être dressé peut être collé dans au moins une zone tandis qu'un outil de ponçage pouvant être dressé ou ne pouvant pas être dressé peut être tendu ou fixé dans l'autre zone.

7. Outil selon l'une quelconque des revendications précédentes, **caractérisé en ce que** le mandrin de logement d'outil (40) présente au moins deux zones, dans lequel au moins un outil de ponçage est une vis sans fin de ponçage (62) pouvant être dressée et au moins un autre outil de ponçage est un outil de ponçage pouvant être dressé ou ne pouvant pas être dressé sous la forme d'un disque de ponçage (63), d'un jeu de disques de ponçage ou d'une vis sans fin de ponçage.

8. Outil selon l'une quelconque des revendications précédentes, **caractérisé en ce que** le mandrin de logement d'outil (40) présente au moins deux zones, dans lequel au moins un outil de ponçage est un disque de ponçage pouvant être dressé ou un jeu de disques de ponçage et au moins un autre outil de ponçage est un outil de ponçage pouvant être dressé ou ne pouvant pas être dressé sous la forme d'un disque de ponçage, d'un jeu de disques de ponçage ou d'une vis sans fin de ponçage.

9. Outil selon la revendication 7 ou 8, **caractérisé en ce que** le mandrin de logement d'outil (40) présente au moins un outil de ponçage de denture, dans lequel au moins un outil de ponçage est une vis sans fin de ponçage pouvant être dressée, un disque de ponçage ou un jeu de disques de ponçage, et au moins un autre outil de ponçage est un outil de ponçage pouvant être dressé ou ne pouvant pas être dressé sous la forme d'un disque de ponçage ou d'un jeu de disques de ponçage pour usiner ainsi des géométries sans denture, telles que des diamètres, des surfaces, des rainures ou des entailles.

10. Outil selon l'une quelconque des revendications précédentes, **caractérisé en ce que** le mandrin de logement d'outil (40) présente une ou deux interfaces pour loger le mandrin d'outil dans une tête d'usinage.
